# EUROPEAN PATENT APPLICATION

(11) **EP 1 744 476 A1**
(43) Date of publication of application: **17.01.2007**
(21) Application number: 05291512.1
(22) Date of filing: 12.07.2005
(51) Int. Cl.: H04B 10/155, H04B 10/158, H04L 27/02

(54) **Transmission method and processing unit for a modulated optical signal**

(71) Applicant: ALCATEL, 75008 Paris (FR)
(72) Inventor: Buchali, Fred, 71336 Waiblingen (DE)
(74) Representative: Kohler Schmid Möbus

(57) **Abstract**

A method for transmitting a modulated optical signal (S) comprising a carrier and at least two sidebands (LSB, USB) which are arranged symmetrically to a carrier wavelength (λC) from a transmitter (2) to a receiver (3) via an optical transmission link (4, 4', 4") comprises the steps of: separating the optical signal (S) into two optical single sideband signals (SB1, SB2) symmetrically to the carrier wavelength (λC), mirroring one of the two sideband signals (SB2) to the spectral location of the other single sideband signal (SB1), and combining both sideband signals (SB1, SB2) prior to optical-electrical conversion at the receiver (3). To this end and according to another aspect of the invention, a signal processing unit (5) comprises a wavelength mirror (7) that mirrors one of the sidebands (SB2) of the transmitted signal (S) onto the other (SB1). The inventive method thus achieves an improved performance of an optical signal transmission system (1), allowing its operation at a lower OSNR, thus extending the distance between optical amplifier stages while relying on less expensive standard components in the transmission link (4, 4', 4").

## Description

### Background of the invention

The invention relates to a method for transmitting a modulated optical signal comprising a carrier and at least two sidebands which are arranged symmetrically to a carrier wavelength from a transmitter to a receiver via an optical transmission link.

The invention also relates to a signal processing unit for a modulated optical signal with a carrier and at least two sidebands which are arranged symmetrically to a carrier wavelength, the signal processing unit being arranged in a transmission link between a transmitter means for transmitting the modulated optical signal and a receiver means for receiving the optical signal.

Optical transmission links, e.g. fiber waveguides, are used in a widespread fashion for the transmission of data between a transmitter and a receiver. Based on wavelength division multiplexing (WDM) such transmissions can be carried out at high bit rates on long-haul fiber optic links. To this end, the transmitter usually comprises light sources in the form of laser sources for generating an electromagnetic (optic) wave, modulators external to the light sources for message/data coding, and a multiplexer to transmit the optical data on different wavelength channels via the optical transmission link. Accordingly, the receiver comprises at least a demultiplexer as well as corresponding receiving means for each wavelength channel.

After modulation, which usually involves multiplying a binary coded baseband signal with a sinusoid, the optical spectrum on a given wavelength channel corresponding to that wavelength consists of a carrier as well as at least two optical sidebands symmetrically arranged around the carrier wavelength. The transmitter generally modulates the power of the optical carrier wave emitted by a laser as a function of the information which is to be transmitted. In this context, RZ, NRZ, or CSRZ modulation schemes are frequently used and entail a variation of power of the carrier wave between two levels, i.e. a high level (binary "1") corresponding to maximum optical power and a low level (binary "0") corresponding to an extinction of the wave. In the CSRZ modulation scheme, not only the power, but also the phase of the optical signal is varied.

The sidebands can be separated into two single sideband signals to be processed and analysed with respect to the coded information in the receiver. According to a known approach, both single sideband signals first undergo an individual optical-electrical conversion, then a simplified soft decision is performed using both electrical signals to determine the message contents. According to a further known approach, a single sideband receiver is used which recovers the transmitted data from the information contained in only one of the sideband signals.

The maximum transmission distance of a fiber optic transmission system is generally limited by the ability of the receiver to distinguish without error between the two power levels mentioned above after the modulated wave has propagated along the optical link. A straightforward way to overcome the problem of limited transmission range at least for a particular application is to increase the ratio between signal and noise, however this involves using highly sophisticated and thus expensive transmission equipment, further necessitating optical amplifier stages in the optical link. Furthermore, with the known approach using a single sideband receiver as described above, since the transmitted power of the signal is distributed essentially evenly between the sidebands, half of the transmitted power is effectively lost, thus aggravating the problem of achievable transmission range.

Additionally, improving the system performance in a general way with respect to the usable optical signal-to-noise ratio (OSNR) would offer a possibility to reach greater transmission distances with a given transmission power.

Another issue with the aforementioned transmission systems is the available number of channels in a WDM system. For a given total spectral bandwidth of the system this number can be increased by increasing the spectral efficiency. According to EP 1 233 562 B1 and EP 1 233 563 A1, a suitable technique is known as VSB (vestigial side band modulation) and involves alternating side band filtering for best management of bandwidth and receiver performance. This is possible since the two sidebands, e.g. of a NRZ spectrum, generally contain redundant information. However, this technique, too, results in an effective loss of transmitted power at reduced optical bandwidth, thus giving no improvement of the possible transmission distance.

### Object of the invention

It is the object of the invention to provide a method of the type mentioned above which leads to an improved performance of an optical transmission system, allowing to operate the system at a lower OSNR, thus extending the distance between optical amplifier stages while relying on less expensive components in the transmission link.

It is also an object of the invention to provide a signal processing unit of the above-mentioned type which can be used together with a transmitter and a receiver in an optical transmission link to carry out the inventive method.

### Description of the invention

This object is achieved by a method of the above-mentioned kind, wherein the optical signal is separated into two optical single sideband signals symmetrically to the carrier wavelength, one of the two single sideband signals is mirrored to the spectral location of the other single sideband signal, and both sideband signals are combined prior to optical-electrical conversion at the receiver.

This object is also achieved by a signal processing unit of the above-mentioned type, which comprises filter means for separating the two sidebands into two optical single sideband signals symmetrically to the carrier wavelength, wavelength mirroring means for mirroring the wavelength of one of the two single sideband signals to the wavelength of the other single sideband signal, and combiner means for combining the converted sideband signal and the other sideband signal to form a combined optical signal to be received by the receiver. In this way the inventive signal processing unit operably functions as an optical pre-processing unit for an inexpensive standard optical receiver.

According to the main inventive idea, the sideband signals on a given wavelength channel are superimposed, i.e. added before optical-electrical (o/e) conversion. Since the sidebands contain redundant information, the addition of identical data contents with independent noise will greatly improve the signal-to-noise ratio, allowing to operate the system at a lower OSNR owing to conservation of the quasi-totality of transmitted power. This in turn makes it possible to increase the distance between optical amplifier stages in a transmission link, thus achieving longer transmission distances at equal or even reduced costs.

The mirroring of sidebands has the advantage that both sidebands will be located within the same optical bandwidth thus allowing sharp optical filtering for efficient noise reduction. Therefore, in a preferred embodiment of the inventive signal processing unit the filter means is an edge filter, in particular a filter with sharp edges and without any phase errors. In an alternative embodiment, if interleaving techniques are used for data transmission, the filter means is chosen to be a de-interleaver.

In order to profit from the advantages of a transparent wavelength conversion with quantum-noise limited operation, according the another embodiment of the inventive signal processing unit, the wavelength mirroring means can be a difference-frequency-generation (DFG) wavelength converter, which offers multi-channel conversion with extremely low cross-talk and free of cross-mixing terms. Furthermore, DFG wavelength mirroring uniquely offers polarisation independent conversion. To this end, preferably a semiconductor wavelength converter, e.g. an AlGaAs waveguide or the like, is used as the wavelength conversion means in a further development of the signal processing unit according to the invention (cf. "Polarization Independent Multi-channel wavelength conversion by Difference-Frequency Generation in AlGaAs waveguides", S. J. B. Yoo, Applications of Photonic Technology, SPIE vol. 3491, pp. 39 - 44, 1998). However, potentially suitable other wavelength conversion techniques are known to a person skilled in the art and may be employed without departing from the scope of the present invention.

To achieve a polarisation independent combined optical signal the combiner means preferably is a polarisation beam combiner operating in orthogonal polarisations. However, alternatively the sideband signals can also be superposed directly. A standard receiver can then be used for data recovery.

According to another advantageous development of the inventive signal processing unit, said unit further comprises a control means for controlling a location of a mirroring wavelength of the wavelength mirroring means as a function of a wavelength of the carrier, which generally corresponds to the center wavelength of an optical signal spectrum on a given channel. Since the spectra are essentially symmetrical, in this way an almost perfect sideband matching after mirroring can be obtained. In the case of CSRZ (carrier-suppressed return-to-zero) signals, the inventive signal processing unit may to the same end comprise a control means for controlling a location of a mirroring wavelength of the wavelength mirroring means as a function of another characteristic feature, in particular clock lines, in a spectrum of the modulated optical signal.

In a further preferred embodiment, the signal processing unit is integrated in the receiving means which further processes the combined signal, thus forming a pre-processing unit of the receiver.

The major effects of the inventive method and signal processing unit as outlined above are an effective spectral narrowing (increase of bandwidth efficiency) in conjunction with noise suppression of data signals due to halving of the optical bandwidth and doubling of the usable signal power.

Further advantages and characteristics of the present invention can be gathered from the following description of a preferred embodiment with reference to the enclosed drawings. The features mentioned above as well as below can be used in accordance with the invention either individually or in conjunction. The embodiments mentioned are not be understood as an exhaustive enumeration but rather as examples with regard to the underlying concept of the present invention.

### Drawings

- Fig. 1: is a schematic block diagram of an optical signal transmission system comprising a signal processing unit according to the invention;
- Figs 2a-c: are spectra of modulated data signals in the optical domain;
- Figs 3a-c: are the spectra of Figs 2a-c, respectively, after filtering; and
- Figs 4a-c: are the spectra of Figs 3a-c, respectively, after mirroring of side-bands.

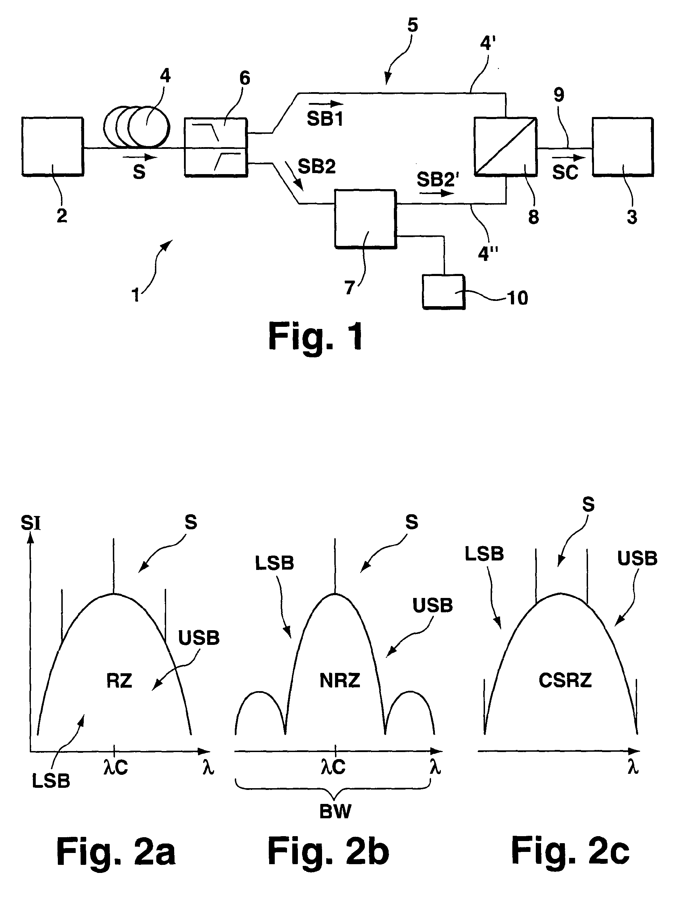

**Fig. 1** shows an optical data transmission system **1** comprising a transmitter **2** and a standard receiver **3,** which are connected by a transmission link **4** in the form of an optical waveguide, e.g. a fiber waveguide. The transmitter in particular comprises laser light sources and modulating means as well as multiplexing means (not shown) for generating and transmitting a modulated optical data signal **S** on a plurality of wavelength channels via the transmission link 4. In the transmission link 4, the system 1 comprises a signal processing unit **5** for pre-processing the modulated optical signal S transmitted via the transmission link 4 prior to reception by the receiver 3. The signal processing unit 5 can either be integrated with the receiver 3, thus forming a pre-processing unit for the receiver, or can be designed as a separate unit in the transmission link 4 apart from the receiver 3. The processing unit 5 comprises an edge filter **6,** behind which the transmission link 4 divides into two branches **4', 4",** each one for a different component **SB1, SB2** of the original signal S obtained from filtering the latter with the edge filter 6 (see below). In one of the branches 4" is arranged a wavelength conversion means in the form of a wavelength mirror **7,** e.g. comprising a semiconductor wavelength converter. The two branches 4', 4" recombine in a polarisation beam combiner **8** combining the components SB1, SB2 in orthogonal polarisations to a combined signal **SC.** The polarization beam combiner is coupled by means of another transmission link segment **9** to the standard receiver 3 comprising additional means (not shown) for data recovery from the combined signal SC. In operable connection with the wavelength mirror 7, the system 1 resp. the signal processing unit 5 comprises a control unit **10** designed for controlling the location of a mirroring wavelength of the wavelength mirror 7 (see below).

The system 1 described above is designed for the transmission and treatment of modulated optical data signals S, which transport coded information from the transmitter 2 to the receiver 3. RZ (return-to-zero), NRZ (non-return-to-zero), and CSRZ (carrier-suppressed return-to-zero) are typical examples for coding schemes which are generally used for the modulation of a carrier wave at a certain wavelength in order to transmit such information.

**Figs 2a-c** show the spectra of a RZ-coded data signal (Fig. 2a), a NZ-coded data signal (Fig. 2b), and a CSRZ-coded data signal (Fig. 2c) in the optical domain in terms of signal intensity **SI** vs. optical wavelength λ. The spectra are symmetrical with respect to the wavelength of the carrier λ**C** (corresponding to the central spike in Figs 2a,b which is not present in Fig. 2c due to carrier suppression). The spectral ranges below and above the carrier wavelength λC are referred to as the lower and upper sidebands **LSB, USB,** respectively, whose presence in the spectrum of the transmitted optical data signal S is due to the effect of modulation. Both sidebands LSB, USB carry the same information in redundant form and need half of the optical bandwidth **BW** of a given wavelength channel. Thus, when using one sideband only, full information would be available at the receiver 3 (Fig. 1). According to the invention, a separation of the two sidebands LSB, USB into two individual single sideband signals SB1, SB2 (cf. Fig. 1) is performed by means of the edge filter 6, which can be any suitable commercially available filter known to a person skilled in the art. Nevertheless, the filter 6 must have sharp edges and must not imprint any phase errors on the filtered signals SB1, SB2. In terms of detection possibility, experimental investigations exhibit a comparable sensitivity for single sideband receivers compared with double sideband receivers, since both bandwidth and signal power are inferior by a factor of two.

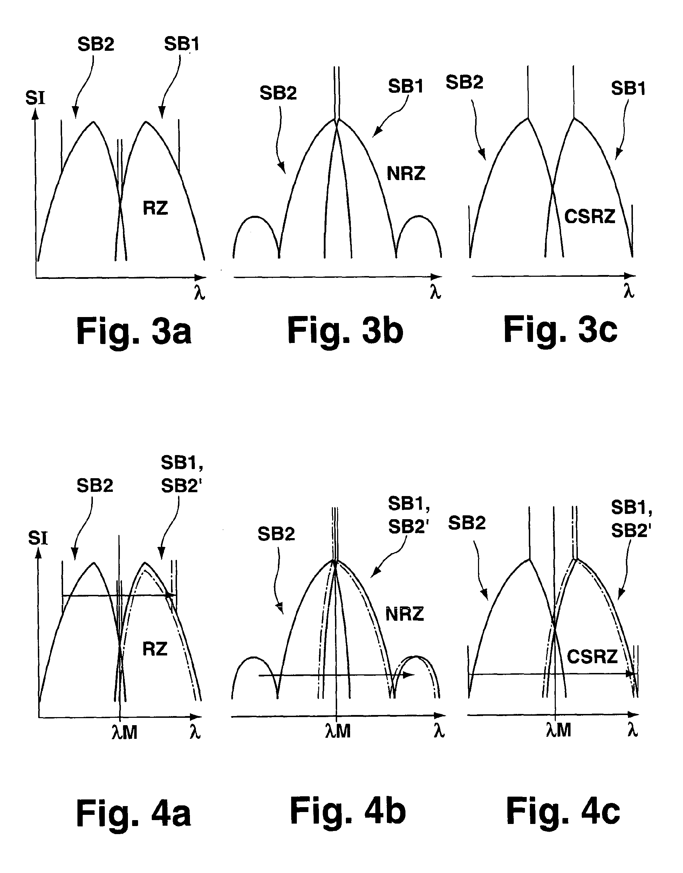

**Figs 3a-c** show the individual spectra of the filtered signals RZ, NRZ, and CSRZ, respectively, which propagate separately as single sideband signals SB1, SB2 along a different one of the two transmission link branches 4', 4" depicted in Fig. 1.

Instead of using only one sideband for the detection of both sidebands in the receiver, as has been proposed by prior art literature, thus losing half of the originally transmitted signal power which has a negative impact on the transmission distance, according to the invention, one of the sideband signals SB2 is optically preprocessed prior to a joint optical-electrical conversion of the combined signal SB. In this way, longer transmission distances can be reached without intermediate signal amplifiers because the integrity of the transmitted signal power contained in the two sidebands is used for detection by the receiver.

To this end, the sideband signal SB2 in the lower branch 4" in the system 1 according to Fig. 1 undergoes an optical wavelength conversion in the wavelength mirror 7 which mirrors said sideband signal SB2 onto the other sideband signal SB1 as can be gathered from the spectra in **Figs 4a-c** for a RZ, a NRZ, and a CSRZ signal, respectively. In Figs 4a-c, the dashed vertical line illustrates the location of the mirroring wavelength **λM.** This location is controllable and adjustable by means of the control unit 10 (Fig. 1), either by detection of the center wavelength λC of the spectrum, i.e. the carrier wavelength for RZ and NRZ spectra, or by detection of clock lines in the case of a CSRZ spectrum. The left-to-right arrows in Figs 4a-c symbolise the mirroring action which eventually places the sub-spectrum corresponding to the lower sideband LSB, i.e. the single sideband signal SB2 at lower wavelengths, on top of the sub-spectrum corresponding to the upper sideband USB, i.e. the single sideband signal SB1. The mirrored part of each spectrum is shown as a dash-dotted line **SB2'** in Figs 4a-c (cf. the signal on branch 4" in Fig. 1).

The mirroring of one sideband has the advantage that both sidebands are now located within the same optical bandwidth, thus allowing sharp optical filtering for additional noise suppression while gaining available bandwidth. The sideband signals SB1, SB2 are then superposed either directly or by means of the polarisation beam combiner 8 shown in Fig. 1 prior to optical-electrical conversion. Thus, the addition of identical data with independent noise greatly improves to signal-to-noise ratio of the combined signal SC at the receiver 3.

By means of the inventive signal processing unit 5 the system 1 achieves an improved performance, allowing its operation at a lower OSNR, thus extending the distance between optical amplifier stages while relying on less expensive standard components in the transmission link and increasing the available number of channels in a WDM system of a given spectral bandwidth.

## Claims

1. Method for transmitting a modulated optical signal (S) comprising a carrier and at least two sidebands (LSB, USB) which are arranged symmetrically to a carrier wavelength (λC) from a transmitter (2) to a receiver (3) via an optical transmission link (4), comprising the steps of:
separating the optical signal (S) into two optical single sideband signals (SB1, SB2) symmetrically to the carrier wavelength (λC),
mirroring one of the two single sideband signals (SB2) to the spectral location of the other single sideband signal (SB1), and
combining both sideband signals (SB1, SB2) prior to optical-electrical conversion at the receiver (3).

2. Signal processing unit (5) for a modulated optical signal (S) with a carrier and at least two sidebands (LSB, USB) which are arranged symmetrically to a carrier wavelength (λC), the signal processing unit (5) being arranged in a transmission link (4) between a transmitter means (2) for transmitting the modulated optical signal (S) and a receiver means (3) for receiving the optical signal, said signal processing unit (5) comprising:
filter means (6) for separating the two sidebands (LSB, USB) into two optical single sideband signals (SB1, SB2) symmetrically to the carrier wavelength (λC), wavelength mirroring means (7) for mirroring the spectral location of one of the two single sideband signals (SB2) to the spectral location of the other single sideband signal (SB1), and
combiner means (8) for combining the mirrored sideband signal (SB2') and the other sideband signal (SB1) to form a combined optical signal (SC) .

3. Signal processing unit according to claim 2, **characterised in that** the filter means (6) is an edge filter.

4. Signal processing unit according to claim 2, **characterised in that** the filter means (6) is a de-interleaver.

5. Signal processing unit according to claim 2, **characterised in that** the wavelength mirroring means (7) is a difference-frequency-generation (DFG) wavelength converter.

6. Signal processing unit according to claim 2, **characterised in that** the wavelength mirroring means (7) is a semiconductor wavelength converter.

7. Signal processing unit according to claim 2, **characterised in that** the combiner means (8) is a polarisation beam combiner.

8. Signal processing unit according to claim 2, further comprising a control means (10) for controlling a location of the mirroring wavelength (λM) of the wavelength mirroring means (7) as a function of the carrier wavelength (λC).

9. Signal processing unit according to claim 2, further comprising a control means (10) for controlling a location of the mirroring wavelength (λM) of the wavelength mirroring means (7) as a function of a characteristic feature, in particular clock lines, in a spectrum of the modulated optical signal (S).

10. Signal processing unit according to claim 2, integrated in the receiving means (3) for further processing the combined signal (SC).
